## Europäisches Patentamt

## European Patent Office

## Office européen des brevets

(19)

(11) Veröffentlichungsnummer: **0 029 148**
**B1**

(12) **EUROPÄISCHE PATENTSCHRIFT**

(45) Veröffentlichungstag der Patentschrift:
06.07.83

(51) Int. Cl.³: **C 09 C 1/50**

(21) Anmeldenummer: **80106695.2**

(22) Anmeldetag: **31.10.80**

(54) **Verfahren zur Absenkung der Russstruktur bei der Herstellung von Furnacerussen.**

(30) Priorität: **07.11.79 DE 2944855**

(43) Veröffentlichungstag der Anmeldung:
**27.05.81 Patentblatt 81/21**

(45) Bekanntmachung des Hinweises auf die Patenterteilung:
**06.07.83 Patentblatt 83/27**

(84) Benannte Vertragsstaaten:
**BE DE FR GB IT NL**

(56) Entgegenhaltungen:
**EP-A-0 002 011**
**EP-A-0 002 011**
**DE-B-1 204 766**
**DE-B-1 204 766**
**FR-A-1 269 413**
**FR-A-1 269 413**
**FR-A-1 333 100**
**FR-A-1 333 100**

(73) Patentinhaber: **Degussa Aktiengesellschaft,
Weissfrauenstrasse 9, D-6000 Frankfurt am Main 1 (DE)**

(72) Erfinder: **Rothbühr, Lothar, Dr., Volkerstrasse 10,
D-5030 Hürth-Hermülheim (DE)**
Erfinder: **Kühner, Gerhard, Dr., Liesingstrasse 1,
D-6450 Hanau (DE)**

BUNDESDRUCKEREI BERLIN

# 0 029 148

## Verfahren zur Absenkung der Rußstruktur bei der Herstellung von Furnacerußen

Die Herstellung von Ruß im Ofenruß- oder Furnacerußverfahren deckt heute den Hauptbedarf der Kautschuk- und Kunststoffindustrie sowie den Bedarf für technische Artikel und Farben. Zu dieser Vorrangstellung gegenüber anderen früher weit verbreiteten Verfahren hat einerseits die umweltfreundliche vollkommen geschlossene Arbeitsweise, die Möglichkeiten zur Automatisierung und zur guten Energieausnutzung beigetragen. Ein wichtiger Faktor ist jedoch auch die Vielfältigkeit der Variationsmöglichkeiten, die es erlaubt, auch eine früher nicht mögliche Vielfalt an maßgeschneiderten Rußqualitäten herzustellen.

Beim Furnacerußverfahren werden mit Hilfe eines Brenngases oder flüssigen Brennstoffs heiße Verbrennungsgase erzeugt, in welche der Rußrohstoff (z. B. hocharomatische Öle) eingesprüht wird. Anschließend wird in den Furnacerußreaktor Wasser eingespritzt, um die Reaktion abzubrechen. Schließlich wird der in den Abgasen enthaltene Ruß in bekannten Anlagen abgeschieden (vgl. Ullmann Encyclopädie der technischen Chemie 4. Auflage , Band 14/1977).

Die drei Parameter Brenngas- (oder Brennstoff-), Verbrennungsluft- und Rußrohstoffmenge sind maßgebliche Größen für den Betrieb eines Rußreaktors, für die Menge an erzeugbarem Ruß und die Ausbeute sowie auch für die erzielbare Rußqualität. Diese Größen sind beim Furnacerußprozeß nicht beliebig variierbar. Im allgemeinen gelten folgende begrenzende Faktoren:

—  Die eingesetzte Verbrennungsluftmenge bestimmt die entstehende Abgasmenge und legt damit den Durchsatz der Produktionsanlage fest. Im Hinblick auf eine wirtschaftliche Fahrweise wird man bestrebt sein, die maximal einsetzbare Verbrennungsluftmenge zu verwirklichen.

—  Das zur Energieerzeugung notwendige Brenngas (oder ein anderer Brennstoff) wird meist in solche Mengen eingesetzt, daß es bezogen auf die mit der Verbrennungsluft eingebrachte Sauerstoffmenge im Unterschuß ist. Andererseits ist es ein Prinzip des Furnacerußverfahrens, das in bezug auf die Brenn- und Rußrohstoffmenge die Sauerstoffmenge im Unterschuß verwendet wird. Will man hohe Ausbeuten erzielen, d. h. soll möglichst wenig Luftsauerstoff mit dem Rußrohstoff in Kontakt treten und diesen verbrennen, so wird man möglichst hohe Brenngasmengen einsetzen. Ein 60—70%iger Umsatz des Luftsauerstoffs mit dem Brenngas ist ein in der Praxis durchaus üblicher Wert. Eine Begrenzung der Brenngasmenge ergibt sich meist aus der Temperaturbeständigkeit der keramischen Ausmauerung, denn ein hoher Brenngaseinsatz führt zu höheren Temperaturbelastungen.

—  Geht man von einer Fahrweise aus, die maximale Verbrennungsluftmenge und größtmöglichste Brenngasmenge verwendet, so ist auch die Rußrohstoffmenge durch die Wahl der Rußqualität festgelegt: Höhere Öleinsätze führen zu grobteiligeren Rußen (größere Primärteilchengröße) mit höheren Ausbeuten, niedrigere Ölmengen dagegen zu entsprechend feinteiligeren Rußen (geringere Primärteilchengröße) mit niedrigeren Ausbeuten.

Unter den wichtigsten Parametern, die für die Rußeigenschaften verantwortlich sind, können an erster Stelle die Primärteilchengröße und die verschiedenen damit in Zusammenhang stehenden Oberflächenmeßgrößen genannt werden. Geringe Primärteilchengrößen entsprechen dabei im wesentlichen hohen Oberflächenmeßgrößen. Als bekannteste Größen auf dem Rußgebiet werden hierbei die Messung der BET-Oberflächengröße nach DIN 66 132, die Jodadsorptionszahl nach DIN 53 582 und die CTAB-Oberfläche für Ruße bestimmt.

Ein weiterer wichtiger Parameter, der die Eigenschaften von Rußen bestimmt, ist die »Rußstruktur«. Unter Rußstruktur wird hierbei der Grad der Verschweißung der Rußprimärteilchen oder des Zusammenhängens der Primärteilchen verstanden. Eine echte Messung dieses Aggregationsgrades der Rußprimärteilchen könnte jedoch nur durch Auswertung von elektronenmikroskopischen Aufnahmen erfolgen. Da dies sehr langwierig und kostspielig ist werden andere Meßmethoden zur Ermittlung der Rußstruktur eingesetzt.

Am gebräuchlichsten ist die »DBP-Absorption« nach DIN 53 601. Hierbei wird die zwischen den Rußpartikeln befindliche Luft durch eine Flüssigkeit, das Dibutylphthalat, verdrängt.

Da hochstrukturierte Ruße aufgrund ihrer sperrigen Struktur einen großen Luftzwischenraum aufweisen, haben sie auch eine hohe DBP-Zahl. Hohe DBP-Zahlen entsprechen also hoher Rußstruktur, niedrige DBP-Zahlen einer niedrigen Rußstruktur.

In der letzten Zeit sind wegen der Verknappung und Verteuerung der Rußrohstoffe auf Ölbasis die Bemühungen verstärkt worden, die Rußrohstoffe noch besser als bisher auszunutzen. Dies bedeutet, daß aus einer gegebenen Menge Rußöl ein noch höherer Prozentsatz in Ruß umgewandelt, d. h., die Ölausbeute (kg Ruß/kg Rußrohstoff) verbessert wird. Auch eine Erhöhung der Produktion bei konstantem oder reduziertem Brenngas- bzw. Brennstoffeinsatz (kg Brennstoff pro kg Ruß) bedeutet eine wichtige energiesparende Maßnahme.

Eine Möglichkeit, die zur Verminderung des spezifischen Brennstoffeinsatzes und zur Erhöhung der Ölausbeute führt, ist die Anhebung der Verbrennungslufttemperatur. Gemäß der deutschen Patentanmeldung P 28 27 872 kommen höhere Verbrennungslufttemperaturen, als bis dahin bekannt,

2

zur Anwendung. Aus dieser Veröffentlichung ist auch zu erkennen, daß hohe Ölausbeuten mit einem niedrigen Verbrennungsluft/Rußrohstoffverhältnis gekoppelt sind. Bei den Bedingungen, die eine hohe Ölausbeute ergeben, kann für eine gegebene Luftmenge erheblich mehr Öl eingesetzt werden, d. h. das Verbrennungsluft/Rußrohstoffverhältnis ist niedrig.

Nun ist jedoch aus der DE-C-1 592 864 der Anmelderin bekannt, daß durch eine Anhebung der Temperatur der Reaktionsluft (Verbrennungsluft) auch die Rußstruktur (DBP-Zahl) ansteigt.

Die Anhebung der Verbrennungslufttemperatur bei konstanter Verbrennungsluftmenge bedeutet, daß mehr Energie in den Reaktor gelangt. Um dies auszugleichen, muß die eingesetzte Rußrohstoffmenge erhöht werden.

Die energiesparende Maßnahme der Erhöhung der Verbrennungslufttemperatur kann jedoch dann zu Schwierigkeiten führen, wenn man sogenannte »low-structur-Ruße« herstellen will. Besonders gravierend tritt das Problem bei der Herstellung mittlerer und grobteiliger Ruße auf, da hier die Rohstoffkonzentration im Reaktionsraum höher ist als bei feinteiligen Rußen. Als weitere Schwierigkeit kommt bei grobteiligen Rußen hinzu, daß sich Koks bilden kann, der sich einerseits im Ofen ablagert und damit die Störungen führt, andererseits jedoch das Rußprodukt mit Koksgrit verunreinigt.

Bekanntlich kann beim Furnacerußprozeß die Rußstruktur, gemessen durch die DBP-Zahl mit Hilfe geringer Mengen an Alkalisalzen, die dem Prozeß zugeführt werden, erniedrigt werden. Es hat sich gezeigt, daß diese Maßnahme beim Übergang zu hohen Rußrohstoffkonzentrationen, wie sie bei der Anwendung hoher Verbrennungslufttemperaturen auftreten können, oder bei der Herstellung von mittleren und grobteiligen Rußen nicht mehr ausreicht, auch wenn die Zugabe von Alkalisalzen wesentlich erhöht wird.

Es bestand somit die Aufgabe, nach Maßnahmen zu suchen, die unter Beibehaltung eines niedrigen spezifischen Brennstoffverbrauchs und hoher Ölausbeuten es gestatten, die Rußstruktur abzusenken.

Zur Behebung der aufgezeigten Schwierigkeiten sind auch schon verschiedene Maßnahmen bekannt:

Nach DE-A-2 726 183 wird vorgeschlagen, den Verbrennungslufteinsatz auf zwei Zonen aufzuteilen. Die in der 2. Zone zugeführte Verbrennungsluft hat die Aufgabe, die sich ausbildenden Rußbrücken zwischen den einzelnen Rußteilchen »wegzubrennen«, um auf diese Weise zu einer Absenkung der Struktur zu kommen. Diese Maßnahme reicht bei dem in der angeführten Schrift beschriebenen Verfahren aus, zeigt jedoch keinen Lösungsweg auf, wenn die Rußkonzentration über das normale Maß hinaus angehoben wird, wie dies beispielsweise bei Erhöhung der Verbrennungslufttemperatur geschieht.

Auch andere bereits vorgeschlagene apparative Maßnahmen, wie z. B. die Veränderung des Sprühwinkels der Ölzugabe (DE-C-1 595 949) führen nicht zu dem gewünschten Ergebnis, da hier die Gefahr der Koksbildung nicht beseitigt ist. Auch die Anwendung der Arbeitsweise nach DE-C-1 592 863 der Anmelderin ist nicht möglich, weil die Erhöhung des Gaseinsatzes bei der hohen Lufttemperatur die Reaktorausmauerung zerstören würde.

Es hat sich nun auch für den Fachmann überraschend herausgestellt, daß man das angestrebte Ziel erreicht, wenn man stark vorgewärmte Verbrennungsluft und ein heißes Schwachgas mit niedrigem Heizwert in den Reaktor einführt. Als ein solches Schwachgas kann das vom Ruß befreite Abgas des Furnacerußprozesses verwendet werden. Gegenstand der Erfindung ist demgemäß ein Verfahren zur Absenkung der Rußstruktur bei der Herstellung von Furnacerußen durch Verbrennen eines Brennstoffes mit Luft in der Brennkammer des Furnacerußreaktors zu heißen Gasen, Einsprühen von flüssigem Rußrohstoff an einer stromabwärts gelegenen Stelle in die heißen Gase und Beenden der Reaktion weiter stromabwärts durch Einsprühen von Wasser und Kühlen, wobei ein niedriges Verhältnis Verbrennungsluft : Rußrohstoff eingestellt wird.

Das Verfahren ist dadurch gekennzeichnet, daß stark vorgewärmte Reaktionsluft mit einer Temperatur im Bereich von 400 – 1200, vorzugsweise 550 – 1050° C eingesetzt, der entstandene Ruß aus den Abgasen entfernt und das im wesentlichen rußfreie Abgas mit einer Temperatur von 500 – 1200° C teilweise in die Brennkammer zurückgeführt wird.

Dabei kann die Rußstruktur durch Erhöhen der rückgeführten Abgasmengen schrittweise abgesenkt werden.

Das Verfahren läßt sich mit dem Zusatz von Alkalimetallverbindungen, welche bekanntlich ebenfalls strukturabsenkend wirken, kombinieren.

Es existieren allerdings schon Vorschläge, Restgase bei der Herstellung von Gasrußen zurückzuführen (FR-A-1 011 093 und DE-B-1 130 100). Beide Vorschläge benutzen jedoch Sauerstoff anstelle von Luft und haben das Ziel, Rußrohstoff und Abgas anstelle von Brennstoff einzusetzen. Gemäß GB-A-778 207 wird gleichfalls Sauerstoff anstelle von Luft eingesetzt, wobei als Ziel die Herstellung von Ruß in Kombination mit Synthesegas verfolgt wird.

Nach der DE-C-622 692 der Anmelderin wird zwar auch mit Abgasrückführung gearbeitet, das Abgas jedoch nur als Träger für den Brennstoff Leichtbenzin benutzt. Die in der DE-B-1 592 913 offenbarte Arbeitsweise schließlich unterscheidet sich von der erfindungsgemäßen Arbeitsweise dadurch, daß die Luftmenge auf die zur theoretischen Verbrennung des Brennstoffs erforderliche Menge begrenzt ist und daß das Abgas von Wasserstoff und Kohlenmonoxid befreit ist.

3

Auch mit den im folgenden abgehandelten bekannten Verfahren konnte die erfindungsgemäße Aufgabe nicht gelöst werden:

Die DE-B-1 204 766 beschreibt ein Verfahren zur Herstellung von Furnacerußen durch Verbrennen von Brenngas mit Luft zu heißen Verbrennungsgasen, deren Einführung in einen Rußreaktor, Kühlen der heißen Abgase mit dem darin suspendierten Ruß, Abscheiden eines mehr oder weniger großen Teils des Rußes und Rückführen des Restes zusammen mit dem Abgas in den Rußreaktor, wobei ein Teil der Abgase aus der Anlage entfernt wird. Gekennzeichnet ist dieses Verfahren insbesondere dadurch, daß etwa 1—50% des erzeugten Rußes in suspendierter Form in den Reaktor zurückgeführt wird.

Dieses Verfahren verwendet im Gegensatz zum erfindungsgemäßen Verfahren keine stark erwärmte Luft für die Reaktion in Verbindung mit deren Abbruch durch Einsprühen von Wasser und sieht auch keine Rückführung des Abgases mit den hohen Temperaturen von 500—1200°C vor.

Die EP-A-0 002 011 befaßt sich gleichfalls mit der Rußherstellung durch Umsetzung eines Brenngases mit Luft in einer Verbrennungszone, Einführung der heißen Verbrennungsgase zusammen mit Rußöl in eine Reaktionszone und Abschrecken des Reaktorausflusses u. a. mit Wasser. Dabei kann die zugeführte Luft auf ca. 38—650°C vorerhitzt werden. Der Reaktorausfluß kann in Ruß und Abgas getrennt und letzteres teilweise in die Verbrennungszone zurückgeführt werden. Diese Rückführung der Abgase, welche auch als Abschreckmittel bezeichnet werden, erfolgt so, daß die Brennkammerauskleidung keinen Schaden nimmt, was bevorzugt durch Umhüllen der heißen Verbrennungsgase mit dem kälteren Abgasrückstrom erreicht wird. Daher muß die Temperatur dieser Abgase vor ihrem Eintritt in die Verbrennungszone bevorzugt unter etwa 260°C liegen.

Das erfindungsgemäße Verfahren unterscheidet sich hiervon entscheidend dadurch, daß die Abgase bei den wesentlich höheren Temperaturen zwischen 500 und 1200°C in die Brennkammer zurückgeführt werden.

Das erfindungsgemäße Verfahren weicht deutlich von den Lehren vorgenannter Schriften ab. Im Gegensatz dazu bezieht sich die vorliegende Erfindung auf

ein Verfahren zur Herstellung von Ölfurnaceruß.

Das Verfahren arbeitet mit Luft und nicht mit Sauerstoffanreicherung, da die Sauerstoffanreicherung das Gegenteil bewirken würde.

Es führt nicht zur Herstellung von Synthesegas, da hierzu andere Voraussetzungen notwendig sind.

Es benutzt das Abgas nicht als Träger für energiereiche Brennstoffe und weicht auch hier sowohl hinsichtlich des Verfahrens als hinsichtlich der erzielbaren Wirkung entscheidend vom Erfindungsgegenstand ab.

Es entfernt weder $H_2$ noch CO aus dem Abgas. Im Gegenteil ist die Anwesenheit dieser nicht-inerten Bestandteile erwünscht und ein Vorteil der vorliegenden Erfindung.

Das Verfahren verwendet stark vorgewärmte Reaktionsluft und führt das im wesentlichen rußfrei gemachte, auf hoher Temperatur gehaltene Abgas teilweise in die Brennkammer zurück.

·Die Abweichungen von den oben zitierten Vorschlägen sind, da auch das Ziel ein vollkommen anderes ist, verständlich: Es geht vorwiegend um die Absenkung der Rußstruktur bei Bedingungen (wie extrem hohe Rußkonzentrationen), welche die Erreichung dieses Zieles erschweren.

Die Erfindung soll an einigen Beispielen erläutert werden, die die Vorteile der erfindungsgemäßen Arbeitsweise aufzeigen, den Erfindungsgedanken jedoch nicht einschränken sollen. Vor den Beispielen wird noch eine Übersicht über die verwendeten Rohstoffe gegeben:

Erdgas:

| | |
|---|---|
| Kohlendioxid | 1,0 Vol-% |
| Methan | 81,6 Vol-% |
| Stickstoff | 13,8 Vol-% |
| Äthan | 2,9 Vol-% |
| höhere KW | 0,7 Vol-% |

Rußrohstoff:

| | |
|---|---|
| Dichte, g/ml | 1,137 |
| Destillationsrückstand, g/100 ml | 3,4 |
| Rückstand nach Conradson, % | 1,6 |
| Asphalthene, % | 1,1 |
| Benzolunlösliche, % | 0,02 |

Siedeverhalten:

| | |
|---|---|
| Siedebeginn: °C | 241 |
| 5 Vol-%, °C | 290 |
| 10 Vol-%, °C | 306 |
| 20 Vol-%, °C | 327 |
| 30 Vol-%, °C | 335 |
| 40 Vol-%, °C | 345 |
| 50 Vol-%, °C | 352 |
| 60 Vol-%, °C | 362 |
| 70 Vol-%, °C | 375 |
| 80 Vol-%, °C | 392 |

Beispiel 1

Ein kleiner Furnacerußreaktor, der den Reaktoren von DE-A-2 530 371 im wesentlichen entspricht, wurde für die Rußherstellung benutzt. Die Brennkammer wies dabei einen Durchmesser von 190 mm, die Mischkammer einen Durchmesser von 40 mm und die Reaktionskammer von 60 mm auf. Mischkammer und Reaktionskammer waren mit einer aus zwei Lagen bestehenden feuerfesten Auskleidung von 220 mm Dicke versehen. Die Abstrahlung der Außenwand wurde durch eine 100 mm starke Steinwolleisolierung niedrig gehalten. In der Brennkammer wurden durch Verbrennen von Erdgas mit Luft heiße Verbrennungsgase hergestellt, im Bereich der Mischkammer Rußrohstoff eingesprüht, so daß sich in der Reaktionskammer Ruß bilden konnte. Nach einer Länge von 2000 mm gerechnet vom Beginn der Mischkammer wurde Wasser eingesprüht. Nach weiterer Abkühlung wurde der Ruß abgeschieden und mengenmäßig bestimmt. Bei allen Versuchsläufen wurde so gefahren, daß ein Ruß konstanter Primärteilchengröße bzw. konstanter Oberflächengröße entstand. Nur unter diesen Bedingungen sind Größen wie Ölausbeuten etc. vergleichbar. Beim Einsatz einer gleichbleibenden Luftmenge, Lufttemperatur und Brenngasmenge wurden nun Versuche durchgeführt, die hohe Rußstruktur abzusenken, die bei dem Nullversuch V 117 aufgetreten war. In den Versuchsserien V 117—V 120 und V 148 wurde zunächst versucht, durch massive Alkalizugabe die Rußstruktur gemessen durch die DBP-Absorption abzusenken. Wie aus Tabelle 1 zu ersehen ist, gelang dies auch, wobei bei einer Zugabe von 6 g Kaliumchlorid pro kg Rußrohstoff das Minimum erreicht war. Eine weitere Erhöhung der Alkalizugabe bewirkte kein weiteres Absinken der DBP-Absorption.

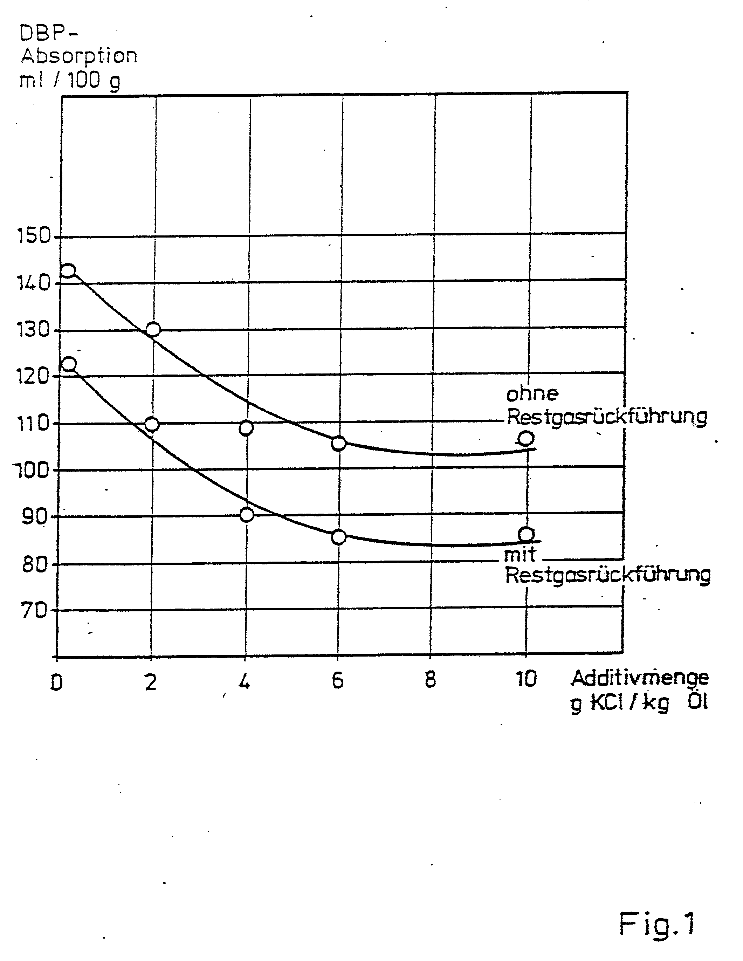

Erst durch die Wiedereinführung einer Menge von 10 Nm³/h von im wesentlichen rußfreiem Abgas (Temperatur von 520°C) konnte eine weitere Absenkung der DBP-Absorption erreicht werden. Diese Tatsache ist aus Tabelle 1 und Fig. 1 zu entnehmen.

Tabelle 1

Herstellung von Ruß mit einer BET-Oberfläche von 105 m$^2$/g mit und ohne Abgasrückführung, Luftmenge 27 Nm$^3$/h (880° C) konstant und Erdgas 1,9 Nm$^3$/h konstant (Abgastemp. 520° C)

| | Abgasrück-führung Menge | KCl-Einsatz g/kg Ruß-rohstoff | Rußrohstoff-menge | Ruß | Ölausbeute | BET-Ober-fläche | DBP-Absorption |
|---|---|---|---|---|---|---|---|
| | Nm$^3$/h | | kg/h | kg/h | % | m$^2$/g | ml/100 g |
| V 117 | 0 | 0 | 7,860 | 4,940 | 62,8 | 102,0 | 143 |
| V 125 | 10 | 0 | 7,900 | 4,950 | 62,6 | 106,2 | 122 |
| V 118 | 0 | 2 | 7,900 | 4,970 | 63,0 | 102,0 | 130 |
| V 126 | 10 | 2 | 7,900 | 4,950 | 62,6 | 102,0 | 111 |
| V 119 | 0 | 4 | 7,890 | 4,940 | 62,6 | 106,0 | 108 |
| V 127 | 10 | 4 | 7,880 | 4,930 | 62,5 | 104,8 | 90 |
| V 120 | 0 | 6 | 7,890 | 4,940 | 62,5 | 104,8 | 106 |
| V 128 | 10 | 6 | 7,890 | 4,950 | 62,7 | 109,6 | 85 |
| V 148 | 0 | 10 | 7,880 | 9,930 | 62,5 | 104,0 | 107 |
| V 150 | 10 | 10 | 7,880 | 4,940 | 62,6 | 105,4 | 86 |

Beispiel 2

Es wurde der gleiche Furnacereaktor benutzt, der in Beispiel 1 beschrieben ist. Im Gegensatz zu Beispiel 1, in dem Luft mit einer Temperatur von 880°C in den Prozeß eingeführt wurde, beschreibt Beispiel 2 eine Versuchsreihe, in der die Prozeßluft eine Temperatur von 520°C hatte. Es wurden nur 2 Punkte untersucht, erstens der Arbeitspunkt ohne Zusatz von Alkaliverbindungen und zweitens der Arbeitspunkt mit 6 g Kcl pro kg Öl, der Punkt mit der höchsten Strukturabsenkung durch Alkalien. Die Temperatur des rückgeführten Abgases betrug 520°C. Aus Tabelle 2 kann klar entnommen werden, daß der erfindungsgemäße Effekt auch dann voll zur Wirkung kommt, wenn die Lufttemperatur und die Temperatur des rückgeführten Abgases gleich sind.

Tabelle 2

Herstellung von Ruß mit einer BET-Oberfläche von 105 m²/g mit und ohne Abgasrückführung, Luftmenge 27 Nm³/h (520° C) konstant und Erdgas 1,9 Nm³/h konstant (Abgastemp. 520° C)

| | Abgasrück-führung Menge | KCl-Einsatz g/kg Ruß-rohstoff | Rußrohstoff-menge | Ruß | Ölausbeute | BET-Ober-fläche | DBP-Absorption |
|---|---|---|---|---|---|---|---|
| | Nm³/h | | kg/h | kg/h | % | m²/g | ml/100 g |
| V 156 | 0 | 0 | 5,560 | 3,220 | 58,0 | 106,0 | 130 |
| V 157 | 10 | 0 | 5,510 | 3,195 | 58,0 | 106,2 | 111 |
| V 158 | 0 | 6 | 5,600 | 3,235 | 57,8 | 107,4 | 100 |
| V 159 | 10 | 6 | 5,460 | 3,110 | 57,0 | 105,0 | 87 |

0 029 148

Beispiel 3

In den Beispielen 1 und 2 ist zwar die Zugabemenge an Alkalisalz variiert worden, um die Grenzen dieser Methode zu zeigen. Dagegen blieb die Zugabe an rückgeführtem Abgas konstant. Für die Erprobung der Wirkungsweise des erfindungsgemäßen Verfahrens war es von Interesse, ob die Zugabe von Abgasmengen in die Verbrennungskammer an sich eine stufenartige Absenkung der Struktur bewirkt oder ob durch die Menge des zurückgeführten Abgases eine stufenlose Absenkung der Rußstruktur möglich ist.

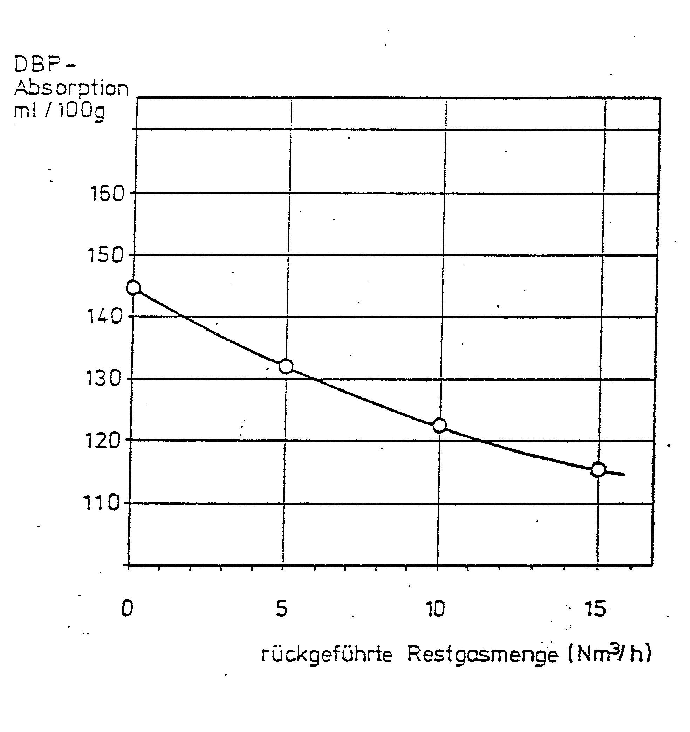

Deshalb wurde in dem gleichen Reaktor, der in den Beispielen 1 und 2 benutzt wurde, die Restgasrückführung auch quantitativ gestaffelt. Wieder wurde eine Grundbedingung mit einer Gesamtluftmenge von 27 Nm³/h (880°C) und einer Brenngasmenge von 1,9 Nm³/h Erdgas gefahren. Auch hier wurde wieder eine einheitliche Primärteilchengröße und Oberflächengröße von ca. 105 m²/g BET- angestrebt. Bei einem Einsatz von 27 Nm³/h Luft fällt eine Abgasmenge von etwa 60 Nm³/h an. Aus praktischen Gründen wurde die Rückführung von Restgas mit 520°C jedoch nur im Bereich von 0 bis 15 Nm³/h variiert. Tabelle 3 und Fig. 2 zeigen, daß die DBP-Absorptionsabsenkung gezielt durch die Quantität der zurückgeführten Restgasmenge eingestellt werden kann.

Tabelle 3

Herstellung von Ruß mit einer BET-Oberfläche von 105 m²/g mit und ohne Abgasrückführung, Luftmenge 27 Nm³/h (880° C) und Erdgas 1,9 Nm³/h konstant (Abgastemp. 520° C)

| | Abgasrück-führung Menge | KCl-Einsatz g/kg Ruß-rohstoff | Rußrohstoff-menge | Ruß | Ölausbeute | BET-Ober-fläche | DBP-Absorption |
|---|---|---|---|---|---|---|---|
| | Nm³/h | | kg/h | kg/h | % | m²/g | ml/100 g |
| V 151 | 0 | 0 | 7,790 | 4,910 | 63,0 | 104,2 | 144 |
| V 152 | 5 | 0 | 7,860 | 4,950 | 62,9 | 106,2 | 132 |
| V 153 | 10 | 0 | 8,800 | 4,900 | 62,8 | 102,0 | 122 |
| V 154 | 15 | 0 | 7,710 | 4,780 | 62,0 | 104,8 | 115 |

### Beispiel 4

Je nach der Art der Rußabscheidung und der weiteren Führung des Abgases fällt dieses mit verschiedenen Temperaturen an. In den Beispielen 1–3 wurde das Abgas mit einer Temperatur von 510–520°C in die Verbrennungskammer zurückgeführt. Es kann jedoch auch Fälle geben, bei denen ein Arbeiten mit Filterschlauchsystemen niedriger Temperaturbeständigkeit erforderlich wird. In Beispiel 4 wurde wieder der Reaktor nach Beispiel 1 verwendet, nach dem Einsprühen von Wasser zum Stoppen der Rußbildungsreaktion wurde durch Kühlflächen auf 160°C abgekühlt und der Ruß durch ein Schlauchfilter geleitet. Durch Weiterleitung des Abgases durch Metallröhren kühlte sich das Gas auf ca. 80°C ab, wobei ein Teil des enthaltenen Wassers kondensiert und abgelassen wurde. Der Rest des Abgases wurde dann wieder für Rückführversuche in die Brennkammer des Reaktors benutzt. Tabelle 4 zeigt einige Ergebnisse dieser Versuchsläufe. Auch hier zeigt sich das schon bekannte Bild.

Tabelle 4

Herstellung von Ruß mit einer BET-Oberfläche von 105 m²/g mit und ohne Abgasrückführung, Luftmenge konstant 27 Nm³/h (880° C) und Erdgas konstant 1,9 Nm³/h (Abgastemp. 80° C)

| | Abgasrück-führung Menge | KCl-Einsatz g/kg Ruß-rohstoff | Rußrohstoff-menge | Ruß | Ölausbeute | BET-Ober-fläche | DBP-Absorption |
|---|---|---|---|---|---|---|---|
| | Nm³/h | | kg/h | kg/h | % | m²/g | ml/100 g |
| V 117 | 0 | 0 | 7,860 | 4,940 | 62,8 | 102,0 | 143 |
| V 121 | 10 | 0 | 7,240 | 4,490 | 62,0 | 104,8 | 121 |
| V 119 | 0 | 4 | 7,890 | 4,940 | 62,5 | 106,2 | 108 |
| V 123 | 10 | 4 | 7,200 | 4,480 | 62,2 | 106,2 | 89 |
| V 120 | 0 | 6 | 7,890 | 4,940 | 62,5 | 104,8 | 106 |
| V 124 | 10 | 6 | 7,220 | 4,480 | 62,2 | 104,7 | 85 |

Beispiel 5

Im Beispiel 5 wurde wieder der in Beispiel 1 beschriebene Reaktor verwendet. Hier sollte versucht werden, ob die Abgasrückführung mengenmäßig bis in einen Bereich gesteigert werden kann, der in der Größenordnung der eingesetzten Luftmenge liegt. Abweichend von den vorhergehenden Beispielen wurde dabei das Abgas mit einer Temperatur von 880° C in den Reaktor eingeführt. Tabelle 5 zeigt die Ergebnisse dieses Versuchslaufs in Relation zu der Fahrweise ohne Abgasrückführung. Wie aus den Prüfwerten ersichtlich, wird durch die Abgasrückführung eine erhebliche Absenkung der DBP-Absorption erreicht.

Tabelle 5

Herstellung von Ruß mit einer BET-Oberfläche von $105\ m^2/g$ mit und ohne Abgasrückführung, Luftmenge konstant $27\ Nm^3/h$ ($500°\,C$) und Erdgas konstant $1,9\ Nm^3/h$ (Abgastemp. $880°\,C$)

| | Abgasrück-führung Menge | KCl-Einsatz g/kg Ruß-rohstoff | Rußrohstoff-menge | Ruß | Ölausbeute | BET-Ober-fläche | DBP-Absorption |
|---|---|---|---|---|---|---|---|
| | $Nm^3/h$ | | kg/h | kg/h | % | $m^2/g$ | ml/100 g |
| V 168 | 0 | 0 | 5,450 | 3,160 | 58,0 | 103,6 | 136 |
| V 166 | 25 | 0 | 5,500 | 3,135 | 57,0 | 103,0 | 112 |

0 029 148

**0 029 148**

Die vorstehenden Beispiele lassen erkennen, daß es mit dem erfindungsgemäßen Verfahren gelingt, die Rußstruktur stufenlos dadurch abzusenken, daß ein Teil des bei der Furnacerußherstellung anfallenden Abgases in die Brennkammer zurückgeführt wird.

Das zurückgeführte Abgas wird aus wirtschaftlichen Gründen möglichst rußfrei sein, da sonst Ausbeuteverluste hinzunehmen sind. Die Anwesenheit von Ruß in diesem Abgas stört jedoch das erfindungsgemäße Verfahren nicht.

Außerdem erhält das lt. Erfindung zurückgeführte Abgas im Gegensatz zu DE-B-1 592 913 noch brennbare Bestandteile wie z. B. Wasserstoff und Kohlenmonoxid. Eine typische Abgasanalyse weist die folgende Zusammensetzung auf:

|                    | Vol-% |
|--------------------|-------|
| Wasserstoff:       | 13,7  |
| Kohlenmonoxid:     | 10,6  |
| Kohlendioxid:      | 3,3   |
| Wasser:            | 19,7  |
| Stickstoff:        | 52,2  |
| Methan:            | 0,3   |
| Acetylen/Äthylen:  | 0,2   |

In der eingangs genannten DE-AS 1 592 913 ist ausgeführt, daß das von brennbaren Bestandteilen befreite und wiedereingeführte Inertgas zu einer beträchtlichen Ausbeutesteigerung bis hin zu einer Verdoppelung der Ausbeute führen würde. Überraschenderweise wurde bei den hier aufgeführten Versuchen gefunden, daß sich die Ausbeute praktisch nicht ändert.

Dies ist umso erstaunlicher, da das erfindungsgemäß eingesetzte Schwachgas im Gegensatz zur DE-B-1 592 913 noch brennbare Bestandteile enthält, die einen Teil des überschüssigen Sauerstoffs zu binden vermögen. Damit stünde zur Verbrennung des Rohstoffes weniger Sauerstoff zur Verfügung.

Dagegen wurde eine andere, ebenfalls unerwartete Feststellung gemacht: Vergleicht man die Beispiele 3 und 4, bei denen das zurückgeführte Gas sich im Temperaturniveau unterscheidet, so zeigt sich, daß bei höherer Temperatur des Rückführgases die Einsatzmenge an Rohstoff und die gewonnene Rußmenge deutlich ansteigen.

| Beispiel | Abgasrückführung | | Rohstoffeinsatz | | Rußproduktion | |
|----------|------------------|------------|-----------------|-----|---------------|-----|
|          | Menge Nm³/h      | Temp. °C   | Menge kg/h      | %¹) | Menge kg/h    | %¹) |
| 4/ V 121 | 10               | 80         | 7.240           | 100 | 4.490         | 100 |
| 3/ V 153 | 10               | 520        | 7.800           | 108 | 4.900         | 109 |

¹) V 121 = 100 gesetzt.

Es ist zu erwarten, daß Rohstoffeinsatzmenge und Rußproduktionsmenge bei weiterer Erhöhung der Temperatur des Rückführgases noch mehr ansteigen und dann auch das Niveau der Grundversuche, bei denen kein Gas zurückgeführt wird, übertreffen.

Auch dieses Ergebnis steht im Gegensatz zur DE-B-1 592 913, in welcher die Rußerzeugung konstant bleibt und infolge der erwähnten Ausbeuteerhöhung die Rohstoffeinsatzmenge deutlich zurückgehen müßte.

Welche Maßnahmen man ergreift, um den Ruß abzuscheiden, ist für das hier beschriebene Verfahren nicht relevant; so können z. B. die Abgase über Filter oder Zyklone geführt werden. Das erfindungsgemäße Verfahren ist nicht auf die Verwendung spezieller Reaktoren oder die Herstellung spezieller Ruße beschränkt, es ist grundsätzlich für jeden Furnacerußreaktor und für die Herstellung jedes Furnacerußes anwendbar. Besonders wirksam ist es jedoch bei Arbeitsbedingungen, die ohne Anwendung der erfindungsgemäßen Maßnahmen die Rußstruktur zu stark erhöhen würden.

**Patentansprüche**

1. Verfahren zur Absenkung der Rußstruktur bei der Herstellung von Furnacerußen durch Verbrennen eines Brennstoffes mit Luft in der Brennkammer des Furnacerußreaktors zu heißen Gasen, Einsprühen von flüssigem Rußrohstoff an einer stromabwärts gelegenen Stelle in die heißen Gase und

15

Beenden der Reaktion weiter stromabwärts durch Einsprühen von Wasser und Kühlen, wobei ein niedriges Verhältnis Verbrennungsluft : Rußrohstoff eingestellt wird, dadurch gekennzeichnet, daß stark vorgewärmte Reaktionsluft mit einer Temperatur im Bereich von 400 – 1200, vorzugsweise 550 – 1050° C eingesetzt, der enstandene Ruß aus den Abgasen entfernt und das im wesentlichen rußfreie Abgas mit einer Temperatur von 500 – 1200° C teilweise in die Brennkammer zurückgeführt wird.

2. Verfahren nach Anspruch 1, dadurch gekennzeichnet, daß durch Erhöhen der rückgeführten Abgasmenge die Rußstruktur schrittweise abgesenkt wird.

3. Verfahren nach Anspruch 1 oder 2, dadurch gekennzeichnet, daß es mit dem Zusatz von Alkalimetallverbindungen kombiniert wird.

## Claims

1. A process for reducing the structure of the carbon black in the production of furnace blacks by the combustion of a fuel with air in the combustion chamber of the furnace black reactor to produce hot gases, spraying liquid carbon black feedstock at a point positioned downstream into the hot gases and terminating the reaction further downstream by spraying in water and cooling, a low ratio of combustion air: carbon black feedstock being adjusted, characterised in that strongly pre-heated reaction air having a temperature ranging from 400 to 1200° C, preferably from 500 to 1050° C is used, the resulting carbon black is removed from the waste gases and the substantially carbon black-free waste gas having a temperature of from 500 to 1200° C is partly returned into the combustion chamber.

2. A process according to claim 1, characterised in that the structure of the carbon black is gradually reduced by increasing the returned quantity of waste gas.

3. A process according to claim 1 or 2, characterised in that it is combined with the addition of alkali metal compounds.

## Revendications

1. Procédé de diminution de structure de noir de fumée lors de la préparation de noirs de fumée au four par combustion d'une matière combustible avec de l'air dans la chambre de combustion d'un réacteur à noir de four à gaz chauds, introduction par pulvérisation en un point en aval, dans les gaz chauds de matière première liquide pour noir de carbone, et arrêt de la réaction plus loin en aval en introduisant par pulvérisation de l'eau et en refroidissant, tout en instituant un faible rapport air de combustion/matière première, procédé caractérisé en ce que l'on met en oeuvre de l'air de réaction fortement préchauffé, à une température comprise entre 400 et 1200° C, de préférence 550 à 1050° C, que l'on élimine, des gaz d'échappement, le noir de carbone qui s'est formé, et que les gaz d'échappement essentiellement exempts de noir de carbone sont partiellement recyclés dans la chambre de combustion, à une température comprise entre 500 et 1200° C.

2. Procédé selon la revendication 1 caractérisé en ce que par augmentation de la quantité de gaz d'échappement recyclé, la structure du noir de carbone est abaissée par étapes.

3. Procédé selon l'une des revendications 1 et 2, caractérisé en ce qu'il est combiné avec l'addition de composés de métaux alcalins.

Fig.1